# EUROPEAN PATENT APPLICATION

(11) **EP 1 204 218 A1**
(43) Date of publication of application: **08.05.2002**
(21) Application number: 01938723.2
(22) Date of filing: 18.06.2001
(51) Int. Cl.: H04B 7/02

(54) **RECEIVING DEVICE AND TRANSMITTING DEVICE**

(30) Priority: 21.06.2000 JP 2000186501
(71) Applicant: MATSUSHITA ELECTRIC INDUSTRIAL CO., LTD., Kadoma-shi, Osaka 571-8501 (JP)
(72) Inventor: UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0105180
(87) International publication number: WO0199306

(57) **Abstract**

A receiving apparatus that is equipped with a decoder that performs equalization and error correction simultaneously, as with a UDMV, for example, and enables burst errors to be corrected and demodulated data error rate characteristics to be improved even when there is fading that causes burst errors in a channel, and a transmitting apparatus that performs data transmission to this receiving apparatus. A transmitting apparatus 100 distributes transmit data to a plurality of carriers of difference frequencies and transmits the transmit data as a plurality of sequences differentiated by frequency. A receiving apparatus 150 performs maximal-ratio-combining of received signals in a combiner 153, performs equalization and Viterbi decoding simultaneously with a UDMV 154, and obtains demodulated data.

## Description

### Technical Field

The present invention relates to a receiving apparatus that performs compensation of signal distortion due to multipath fading, and error correction, and a transmitting apparatus that transmits data to this receiving apparatus.

### Background Art

Overcoming multipath fading and improving transmission quality are essential tasks in the field of mobile communications. An equalizer is effective in overcoming multipath fading, and a method employing an error correcting code-especially a method that decodes a convolutional code with a Viterbi decoder-is effective in improving transmission quality.

With a conventional receiving apparatus and transmitting apparatus (hereinafter both referred to simply as "transmission apparatus"), good-quality data transmission is achieved by compensating for signal distortion due to multipath fading with an equalizer such as an MLSE (Maximum Likelihood Sequence Estimator) or DFE (Decision Feedback Equalizer), and using error correction processing such as Viterbi decoding to correct errors that cannot be compensated for.

However, in the above-described transmission apparatuses, signal distortion compensation with an equalizer and error correction processing with a Viterbi decoder are carried out independently, with error correction decoding being performed after symbol determination has first been carried out with an equalizer, and there is thus a problem of performance degradation due to equalizer determination errors.

A technology that solves this problem is the decoder (UDMV: United Demodulator of MLSE and Viterbi Decoder) disclosed in Unexamined Japanese Patent Publication No.HEI 10-322253. This supposes a Virtual Coder that combines a channel model and a convolutional coder, and by using this to perform Viterbi decoding, equalization by means of an MLSE and Viterbi decoding for a convolutional code are carried out simultaneously, thereby improving error correction capability. That is to say, a UDMV is a demodulator that combines an MLSE equalizer with a Viterbi decoder.

However, since equalization is a technique for compensating for signal distortion and an error correcting code is a technique for correcting mainly random errors, when burst errors occur in which there is a concentration of errors due to multipath fading, burst errors cannot be corrected with equalization and an error correcting code, and the error rate characteristics of demodulated data deteriorate.

In general, an effective way of handling burst errors is interleaving whereby errors are dispersed by changing the signal sequence order. When interleaving is used together with equalization and an error correcting code, demodulation is performed by having the order of the signal sequence for which distortion occurring in the channel has been compensated by equalization rearranged in the opposite way to that used in interleaving, and executing error correction on that rearranged signal sequence to obtain receive data. However, since a UDMV comprises a virtual coder that combines an equalizer and a convolutional coder, and equalization and error correction are performed simultaneously in that virtual coder, the signal sequence cannot be rearranged between equalization and error correction, and it is not possible to use interleaving together with a UDMV.

### Disclosure of Invention

It is an object of the present invention to provide a receiving apparatus that is equipped with a decoder that performs equalization and error correction simultaneously, as with a UDMV, for example, and enables burst errors to be corrected and demodulated data error rate characteristics to be improved even when there is fading that causes burst errors in a channel, and a transmitting apparatus that performs data transmission to this receiving apparatus.

The present inventors arrived at the present invention by considering fading, which is a phenomenon peculiar to radio communications, with regard to a burst error correction method in a UDMV, for example, and finding that signals that undergo mutually different fading in respective sequences in a channel have mutually different characteristics with regard to burst errors, also, when the fading correlation between sequences is not high.

According to one mode of the present invention, a transmitting apparatus communicates with a receiving apparatus that has demodulating means for simultaneously performing equalization that compensates for signal distortion due to multipath fading and error correction that decodes error correcting coded data, and this transmitting apparatus has distributing means for distributing transmit data to a plurality of sequences, and radio transmitting means for performing radio transmission of data distributed to a plurality of sequences by the distributing means.

According to another mode of the present invention, a receiving apparatus has radio receiving means for performing radio reception of a plurality of sequences of data, combining means for combining a plurality of sequences of data received as radio signals by the radio receiving means, and demodulating means for simultaneously performing equalization that compensates for signal distortion due to multipath fading and error correction that decodes error correcting coded data on the results obtained by combining the plurality of sequences of data by means of the combining means.

### Brief Description of Drawings

FIG.1 is a block diagram showing a schematic configuration of a transmitting apparatus and receiving apparatus according to Embodiment 1 of the present invention;
FIG.2 is a drawing showing the configuration of the functional blocks of the combiner of a receiving apparatus according to Embodiment 1;
FIG.3 is a drawing showing the configuration of the functional blocks of the UDMV of a receiving apparatus according to Embodiment 1;
FIG. 4 is a drawing that illustrates the compensation of signal distortion due to fading that is a cause of burst errors;
FIG.5 is a block diagram showing a schematic configuration of a transmitting apparatus and receiving apparatus according to Embodiment 2 of the present invention;
FIG.6 is a drawing that illustrates parallel/serial conversion of baseband signals that have undergone fading;
FIG.7 is a block diagram showing a schematic configuration of a transmitting apparatus and receiving apparatus according to Embodiment 3 of the present invention;
FIG.8 is a block diagram showing a schematic configuration of a transmitting apparatus and receiving apparatus according to Embodiment 4 of the present invention;
FIG.9 is a block diagram showing a schematic configuration of a transmitting apparatus and receiving apparatus according to Embodiment 5 of the present invention;
FIG.10 is a block diagram showing a schematic configuration of a transmitting apparatus and receiving apparatus according to Embodiment 6 of the present invention;
FIG.11 is a block diagram showing a schematic configuration of a transmitting apparatus and receiving apparatus according to Embodiment 7 of the present invention;
FIG.12 is a block diagram showing a schematic configuration of a transmitting apparatus and receiving apparatus according to Embodiment 8 of the present invention;
FIG.13 is a block diagram showing a schematic configuration of a transmitting apparatus and receiving apparatus according to Embodiment 9 of the present invention;
FIG.14 is a block diagram showing a schematic configuration of a transmitting apparatus and receiving apparatus according to Embodiment 10 of the present invention; and
FIG.15 is a block diagram showing the functional blocks of the UDMV in a receiving apparatus according to Embodiment 10.

### Best Mode for Carrying out the Invention

With reference now to the accompanying drawings, embodiments of the present invention will be explained in detail below.

### (Embodiment 1)

This embodiment is a frequency diversity example in which, on the transmitting side, transmit data is transmitted after being distributed to a plurality of carriers of different frequencies, and on the receiving side, received signals that have undergone different fading in a channel are subjected to maximal-ratio-combining and compensation is performed for signal distortion due to fading that is a cause of burst errors, and a signal compensated for signal distortion due to fading is demodulated by a UDMV.

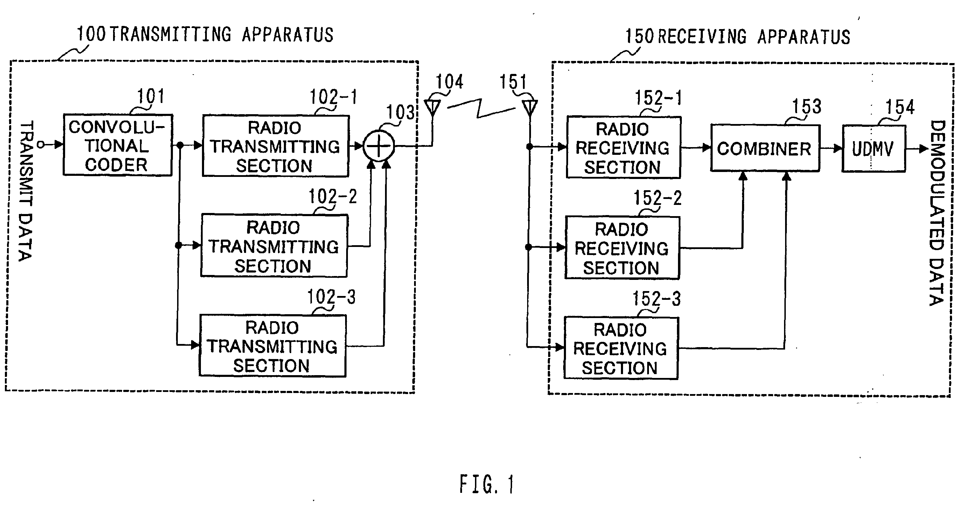

FIG.1 is a block diagram showing a schematic configuration of a receiving apparatus and transmitting apparatus according to Embodiment 1 of the present invention.

The transmitting apparatus 100 according to this embodiment distributes transmit data to a plurality of carriers of different frequencies, and transmits the transmit data in a plurality of sequences differentiated by frequency. A receiving apparatus 150 performs maximal-ratio-combining of received signals and obtains receive data by having equalization and Viterbi decoding performed simultaneously by a UDMV.

First, with regard to the configuration of the transmitting apparatus 100, a case where transmit data is distributed to three sequences will be described as an example.

A convolutional coder 101 performs convolutional coding of transmit data with a predetermined constraint length to create a baseband signal, and outputs this baseband signal to three radio transmitting sections 102-1 through 102-3. Radio transmitting sections 102-1 through 102-3 multiply carriers with different frequencies f1 through f3, respectively, by the baseband signal output from the convolutional coder 101 to create radio frequency signals. An adder 103 adds the three sequences of radio frequency signals output from radio transmitting sections 102-1 through 102-3, and transmits the resulting signal from an antenna 104.

Next, the configuration of the receiving apparatus 150 will be described.

Radio receiving section 152-1 receives the transmit signal from the transmitting apparatus 100 via an antenna 151, and multiplies that received signal by a carrier of frequency f1 to produce baseband signal #1. Radio receiving section 152-2 receives the transmit signal from the transmitting apparatus 100 via the antenna 151, and multiplies that received signal by a carrier of frequency f2 to produce baseband signal #2. Radio receiving section 152-3 receives the transmit signal from the transmitting apparatus 100 via the antenna 151, and multiplies that received signal by a carrier of frequency f3 to produce baseband signal #3. A combiner 153 performs maximal-ratio-combining of baseband signals #1 through #3 output from radio receiving sections 152-1 through 152-3, and outputs the resulting signal to a UDMV 154. The UDMV 154 is a demodulator combining an MLSE equalizer and a Viterbi decoder. The UDMV 154 simultaneously performs equalization and Viterbi decoding on the maximal-ratio-combining baseband signal output from the combiner 153, and obtains demodulated data.

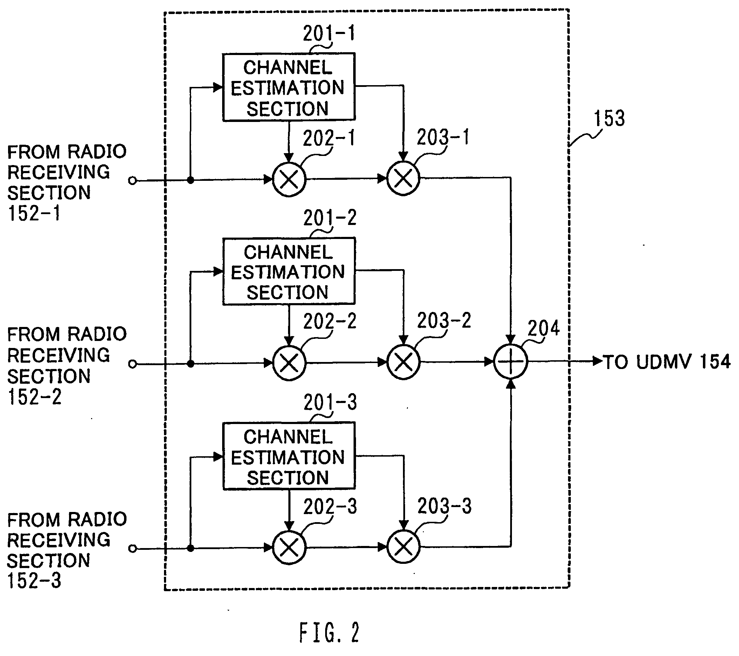

FIG.2 shows the configuration of the functional blocks of the combiner 153.

According to a known signal included in baseband signals #1 through #3 output from radio receiving sections 152-1 through 152-3, channel estimation sections 201-1 through 201-3 estimate the received power and phase rotation of baseband signals #1 through #3. Multipliers 202-1 through 202-3 perform complex multiplications of baseband signals #1 through #3 output from corresponding radio receiving sections 152-1 through 152-3 by the received power and phase rotation estimated by corresponding channel estimation sections 201-1 through 201-3 to compensate for received signal amplitude fluctuation and phase rotation. Multipliers 203-1 through 203-3 multiply the outputs from multipliers 202-1 through 202-3 by a weighting factor proportional to the received power estimated by corresponding channel estimation sections 201-1 through 201-3, and output the results to an adder 204. The adder 204 adds the outputs of multipliers 203-1 through 203-3, and outputs the result to the UDMV 154.

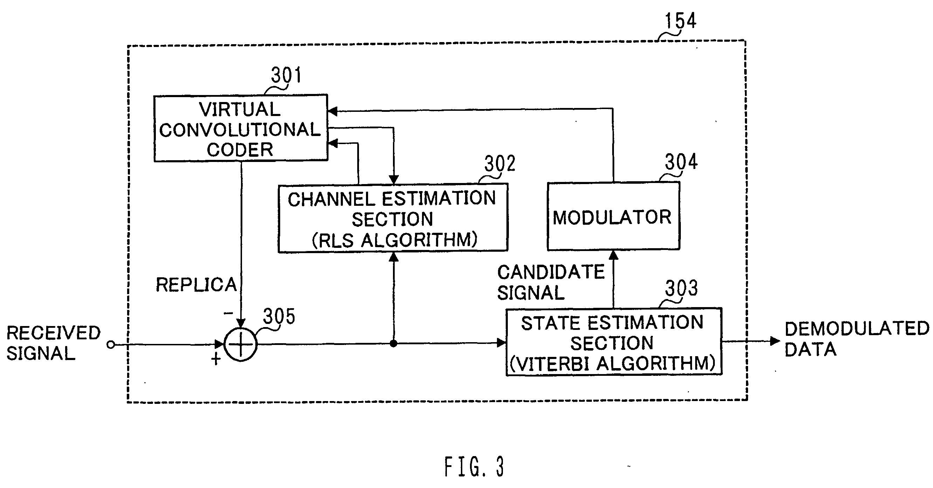

FIG.3 shows the configuration of the functional blocks of the UDMV 154. A virtual convolutional coder 301 is a digital filter configured so as to have a state in which the convolutional coder 101 and distortion arising in a channel are combined. A channel estimation section 302 estimates a complex gain coefficient using a known signal (unique word) inserted into the received signal, and sets this in the virtual convolutional coder 301. The complex gain coefficient is a coefficient for compensating for distortion that arises in a channel. A state estimation section 303 outputs a candidate signal corresponding to the number of bits of the transmit signal to a modulator 304. The modulator 304 applies to the candidate signal the same modulation as applied in the transmitting apparatus 100, and outputs the resulting signal to the virtual convolutional coder 301. The state estimation section 303 takes from an adder 305 an error signal indicating the error between the replica from the virtual convolutional coder 301 and the actual received signal, selects a path that connects to a candidate with a small error, and outputs a data stream linked by the selected path as demodulated data.

The virtual convolutional coder 301 shown in this figure is composed of a series of delayers in which delayers are connected in series, a number of complex gain blocks corresponding to the number of channel waves, complex exclusive-OR circuits provided according to each complex gain block, complex gain circuits that multiply the complex exclusive-OR circuit output by gain that compensates for distortion arising in the channel, and a complex adder that adds the outputs of each complex gain circuit.

Here, the delayers, complex gain adders , and complex exclusive-OR circuits in the virtual convolutional coder 301 have the same filter structure as the convolutional coder 101. The constraint length and complex gain of the convolutional coder 101 of the transmitting apparatus 100 are fixed and predetermined, and therefore it is possible to determine the number of delays and each complex gain (c) of the complex gain adder per complex gain block.

In the virtual convolutional coder 301, the delay data group input to each complex gain block is shifted on a block-by-block basis one delay at a time from the highest-level block to the lowest-level block. By regarding each delay due to a delayer as a propagation path delay, a delayer, complex gain adder, and complex adder constitute a digital filter structure that compensates for distortion arising in the channel. In the UDMV 154, the channel estimation section 302 estimates a filter coefficient that compensates for distortion according to the current state of each propagation path through the use of a unique word, and determines the complex gain (p) of the complex gain adder of the virtual convolutional coder 301.

The operation of a transmitting apparatus 100 and receiving apparatus 150 with the above configurations will now be described.

First, in the transmitting apparatus 100, transmit data is convolutional-coded by the convolutional coder 101 and a baseband signal is generated. This baseband signal is multiplied by carriers with different frequencies f1 through f3, respectively, by radio transmitting sections 102-1 through 102-3, creating radio frequency signals. These radio frequency signals are added by the adder 103, and the resulting signal is transmitted from the antenna 104.

In the receiving apparatus 150, a signal transmitted from the transmitting apparatus 100 that has been subjected to distortion arising in the channel is received by the antenna 151. This received signal is multiplied in radio receiving sections 152-1 through 152-3, respectively, by carriers of different frequencies f1 through f3, creating baseband signals #1 through #3. These baseband signals #1 through #3 undergo maximal-ratio-combining in the combiner 153. The maximal-ratio-combining baseband signal is input to the UDMV 154, equalization and Viterbi decoding are performed simultaneously by the UDMV 154, and demodulated data is obtained.

The operation of the combiner 153 will now be described.

The combiner 153 compensates for signal distortion due to fading that causes burst errors by performing maximal-ratio-combining of baseband signals #1 through #3 obtained by radio receiving sections 152-1 through 152-3.

In the combiner 153, according to a known signal included in baseband signals #1 through #3 output from radio receiving sections 152-1 through 152-3, the received power and phase rotation of baseband signals #1 through #3 are estimated by channel estimation sections 201-1 through 201-3. For baseband signals #1 through #3 output from corresponding radio receiving sections 152-1 through 152-3, the received power and phase rotation estimated by corresponding channel estimation sections 201-1 through 201-3 undergo complex multiplication in corresponding multipliers 202-1 through 202-3, compensating for received signal amplitude fluctuation and phase rotation, then are multiplied, in multipliers 203-1 through 203-3, by a weighting factor proportional to the received power estimated by corresponding channel estimation sections 201-1 through 201-3, and output to the adder 204. In the adder 204, the outputs of multipliers 203-1 through 203-3 are added, and signal distortion due to fading that is a cause of burst errors is compensated for.

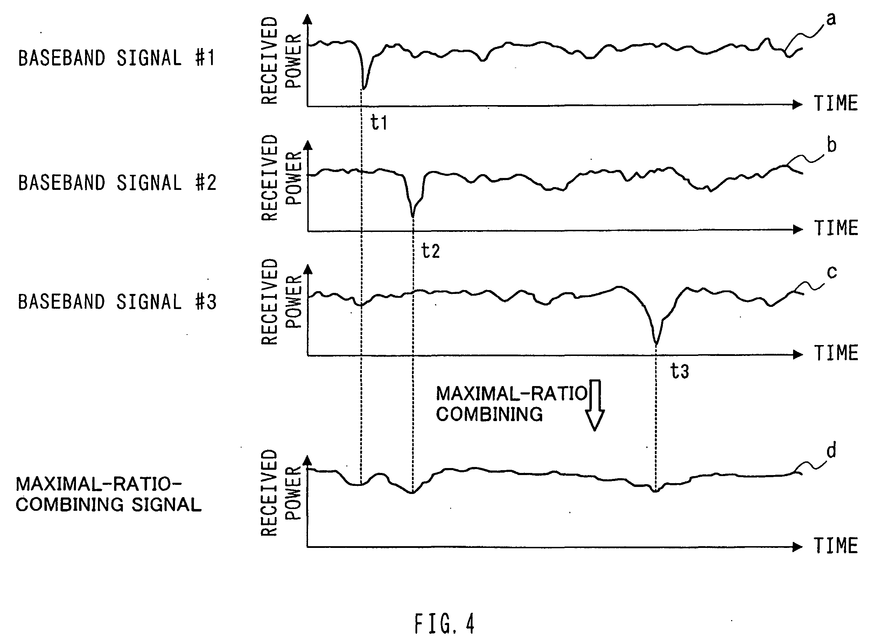

Here, compensation of signal distortion due to fading by having the signals of each sequence combined by the combiner 153 will be described using FIG.4.

FIG. 4 is a drawing that illustrates the compensation in the combiner 153 of signal distortion due to fading that is a cause of burst errors. Radio frequency signals multiplied by carriers of different frequencies f1 through f3, respectively, in the transmitting apparatus 100 each undergo different fading (frequency selective fading) in the channel, and are received by the receiving apparatus 150. Characteristic curves illustrating variations in the received power of these signals over time are shown in FIG.4. Characteristic curve a shows variations over time in the received power of baseband signal #1, characteristic curve b shows variations over time in the received power of baseband signal #2, and characteristic curve c shows variations over time in the received power of baseband signal #3. As shown in this figure, baseband signal #1 is received at low received power due to the effects of fading at time t1. Similarly, baseband signal #2 and baseband signal #3 are received at low received power due to the effects of fading at time t2 and t3, respectively. Signals received at low received power in this way are susceptible to erroneous demodulation, and may cause burst errors. Each of baseband signals #1 through #3 received in this way is multiplied by a weight proportional to its received power in corresponding multiplier 203-1 through 203-3, and the signals are added by the adder 204 to give a signal in which the low received power parts are compensated for, as shown in characteristic curve d. Characteristic curve d shows variations over time in received power of maximal-ratio-combining baseband signals #1 through #3.

Next, the operation of the UDMV 154 will be described.

As described above, a maximal-ratio-combining signal is output to the UDMV 154 where equalization and Viterbi decoding are performed simultaneously, and demodulated data is obtained. The UDMV 154 has a state in which the convolutional coder 101 and distortion arising in a channel are combined, and simultaneously performs equalization by means of an MLSE and error correction by means of Viterbi decoding.

In the UDMV 154, a candidate signal conveyed from the state estimation section 303 is input to the first-stage delayer in the delayer series provided in the virtual convolutional coder 301 via the modulator 304, and delayed sequentially. This delayed candidate signal is first multiplied by complex gain (c) by a complex gain adder, and then the real part and imaginary part are exclusive-ORed. The complex gain adder corresponds to the complex gain adder provided in the convolutional coder 101, and can have only a value of 0, 1, or (j+1). The complex exclusive-OR circuit performs complex exclusive-ORing of complex gain adder outputs. The complex exclusive-OR circuit output is then again multiplied by gain (p) by the complex gain adder. The complex gain adder outputs are all added by a complex adder, and become a received signal (replica).

Thus, according to a receiving apparatus and transmitting apparatus of this embodiment, a transmitting apparatus 100 transmits transmit data after distributing it to a plurality of carriers of different frequencies, a receiving apparatus 150 performs maximal-ratio-combining of received signals that have undergone different fading in the channel and compensates for signal distortion due to fading that is a cause of burst errors, and a UDMV 154 provided in the receiving apparatus demodulates the signal compensated for signal distortion due to fading, enabling error rate characteristics to be improved when there is fading that causes burst errors in a channel.

With regard to the operation of the UDMV according to this embodiment, entire content of Unexamined Japanese Patent Publication No.HEI 10-322253 (RECEIVING APPARATUS AND TRANSMITTING APPARATUS, AND BASE STATION AND COMMUNICATION TERMINAL APPARATUS USING THESE) previously invented by the present inventors is expressly incorporated by reference herein.

In this embodiment, a case where transmit data is distributed to three carriers of different frequencies f1 through f3 has been described as an example, but the present invention is not limited to this, and transmit data may be distributed to any number of carriers of different frequencies.

### (Embodiment 2)

This embodiment is an example in which, on the transmitting side, transmit data converted to parallel signals is transmitted after being distributed to a plurality of carriers of different frequencies., and on the receiving side, received signals (parallel signals) that have undergone different fading in a channel are converted to a serial signal, whereby compensation is performed for burst errors, and that signal compensated for burst errors is demodulated by a UDMV.

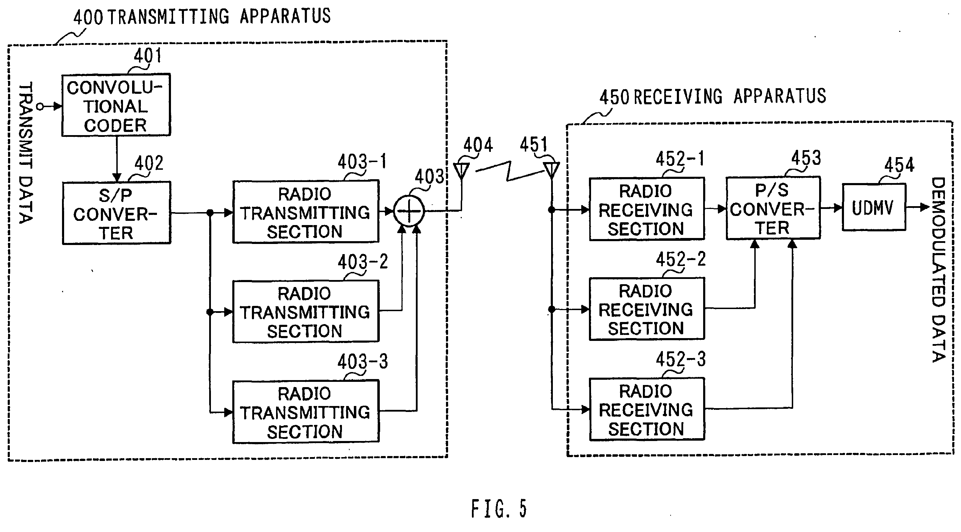

FIG.5 is a block diagram showing a schematic configuration of a receiving apparatus and transmitting apparatus according to Embodiment 2 of the present invention.

The transmitting apparatus 400 according to this embodiment transmits transmit data converted to parallel signals after placing it on a plurality of carriers of different frequencies. A receiving apparatus 450 converts received signals to a serial signal, simultaneously performs equalization and Viterbi decoding by means of a UDMV, and obtains receive data.

First, with regard to the configuration of the transmitting apparatus 400, a case where transmit data is distributed to three sequences will be described as an example.

A convolutional coder 401 performs convolutional coding of transmit data with a predetermined constraint length to create a baseband signal, and outputs this baseband signal to an S/P converter 402. The S/P converter 402 converts the serial baseband signal output from the convolutional coder 401 to parallel signals on a slot-by-slot basis, and outputs the converted parallel signals to radio transmitting sections 403-1 through 403-3. Radio transmitting sections 403-1 through 403-3 multiply carriers with different frequencies f1 through f3, respectively, by the baseband signals output from the S/P converter 402 to create radio frequency signals. An adder 404 adds the radio frequency signals output from radio transmitting sections 403-1 through 403-3, and transmits the resulting signal from an antenna 405.

Next, the configuration of the receiving apparatus 450 will be described.

Radio receiving sections 452-1 through 452-3 receive the radio frequency signal from the transmitting apparatus 400 via an antenna 451, and multiply respective carriers of different frequencies f1 through f3 by the radio frequency signal to generate baseband signals #1 through #3. A P/S converter 453 converts the parallel baseband signals output from radio receiving sections 452-1 through 452-3 to a serial signal on a slot-by-slot basis, and outputs the converted serial signal to a UDMV 454. The UDMV 454 simultaneously performs equalization and Viterbi decoding on the maximal-ratio-combining baseband signal output from the P/S converter 453, and obtains demodulated data.

The operation of a transmitting apparatus 400 and receiving apparatus 450 with the above configurations will now be described.

First, in the transmitting apparatus 400, transmit data is convolutional-coded by the convolutional coder 401 and a serial baseband signal is generated. This baseband signal is converted by the S/P converter 402 to parallel signals which are output to radio transmitting sections 403-1 through 403-3, and multiplied by carriers with different frequencies f1 through f3, respectively, by radio transmitting sections 403-1 through 403-3, creating radio frequency signals. The radio frequency signals output from radio transmitting sections 403-1 through 403-3 are added by the adder 404, and the resulting signal is transmitted from the antenna 405.

In the receiving apparatus 450, a signal transmitted from the transmitting apparatus 400 that has been subjected to distortion arising in the channel is received by the antenna 451. This received signal is multiplied in radio receiving sections 452-1 through 452-3, respectively, by carriers of different frequencies f1 through f3, creating baseband signals #1 through #3. These baseband signals #1 through #3 are converted to a serial signal on a slot-by-slot basis by the P/S converter 453, and this signal is output to the UDMV 454 where equalization and Viterbi decoding are performed simultaneously, and demodulated data is obtained.

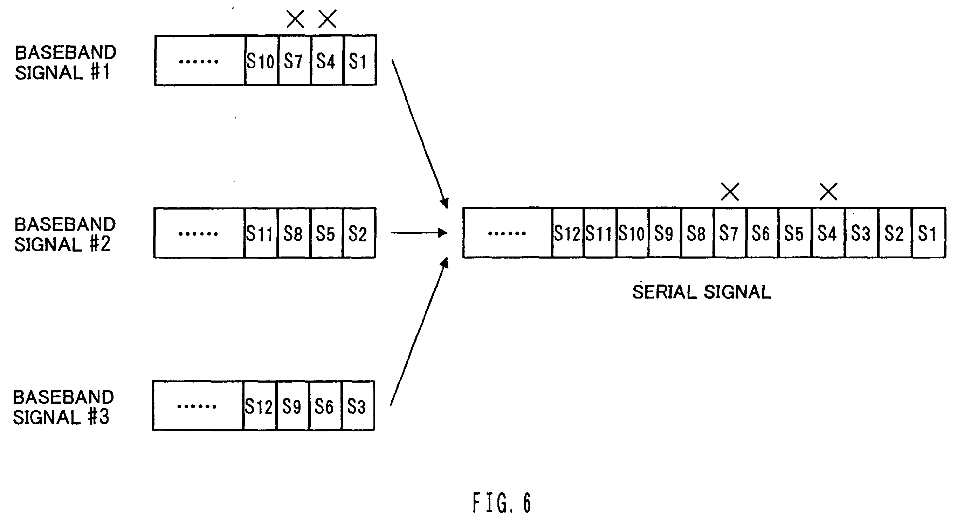

Compensation of signal distortion due to fading by having the several signal sequences converted to a serial signal by the P/S converter 453 will now be described using FIG.6. FIG.6 is a drawing that illustrates parallel/serial conversion of baseband signals that have undergone fading.

Radio frequency signals multiplied respectively by carriers with different frequencies f1 through f3 in the transmitting apparatus 400 each undergo different fading in the channel, are received by the receiving apparatus 450, and are subjected to predetermined radio reception processing to produce baseband signals #1 through #3. As shown in this figure, S4 and S7 in baseband signal #1, which is a parallel signal, are symbols that will cause errors in demodulation due to the effects of fading. In this case, when these parallel baseband signals #1 through #3 are converted to a serial signal, error-causing S4 and S7 are separated by two slots within a frame. Therefore, converting a parallel signal in which error-causing symbols are concentrated to a serial signal results in the error-causing symbols becoming dispersed, making it possible to prevent burst errors during demodulation.

Thus, according to a receiving apparatus and transmitting apparatus of this embodiment, a transmitting apparatus 400 transmits transmit data after converting it to parallel signals and distributing it to a plurality of carriers of different frequencies, and a receiving apparatus 450 converts received signals that have undergone different fading in the channel to a serial signal, dispersing symbols subjected to fading that are a cause of burst errors, so that the receiving apparatus can obtain adequate error rate characteristics even when there is fading that causes burst errors in a channel.

### (Embodiment 3)

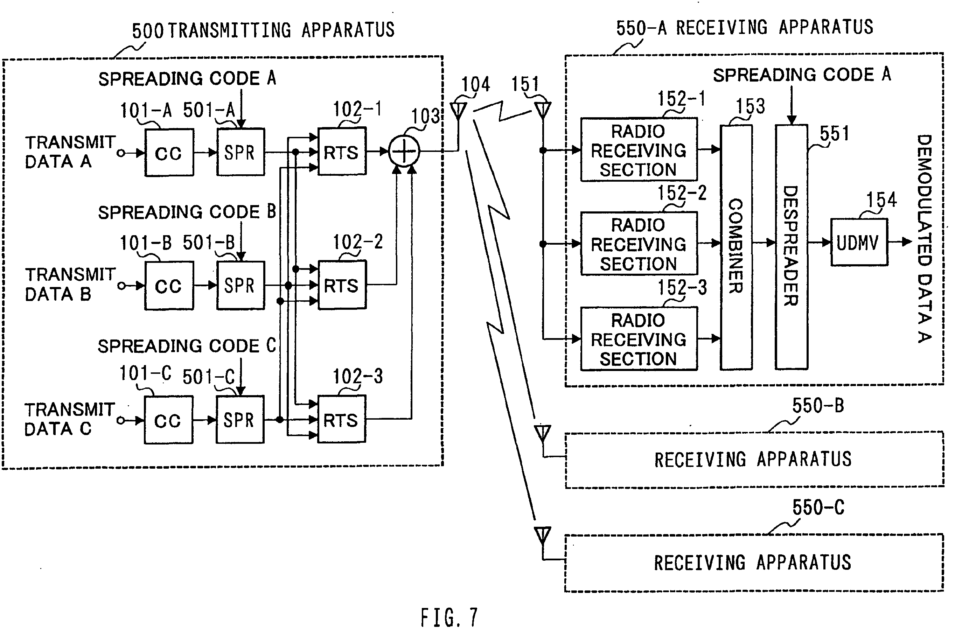

This embodiment is a modified example of Embodiment 1, differing from Embodiment 1 in that carrier multiplication is performed after executing spreading processing on transmit signals. This embodiment will be described below with reference to FIG.7. Parts in FIG.7 identical to those in Embodiment 1 are assigned the same codes as in Embodiment 1 and their detailed explanations are omitted.

FIG.7 is a block diagram showing a schematic configuration of a receiving apparatus and transmitting apparatus according to Embodiment 3 of the present invention. Although not shown in the figure, receiving apparatus 550-B and receiving apparatus 550-C have the same configuration as receiving apparatus 550-A.

The transmitting apparatus 500 performs radio communication with receiving apparatuses 550-A through 550-C. In the transmitting apparatus 500, CC(convolutional coders) 101-A through 101-C perform convolutional coding of corresponding transmit data A through C with a predetermined constraint length to create baseband signals, and output these baseband signals to SPR(spreaders) 501-A through 501-C. SPR 501-A multiplies the signal that has been convolutional-coded by CC 101-A by spreading code A, and outputs the resulting signal to RTS(radio transmitting sections) 102-1 through 102-3. SPR 501-B multiplies the signal that has been convolutional-coded by CC 101-B by spreading code B, and outputs the resulting signal to RTS 102-1 through 102-3. SPR 501-C multiplies the signal that has been convolutional coded by CC 101-C by spreading code C, and outputs the resulting signal to RTS 102-1 through 102-3. RTS 102-1 through 102-3 multiply carriers with different frequencies f1 through f3, respectively, by the baseband signals output from SPR 501-A through 501-C to create radio frequency signals.

In receiving apparatus 550-A, a despreader 551 multiplies the output of a combiner 153 by spreading code A and outputs the resulting signal to a UDMV 154. The UDMV 154 simultaneously performs equalization and Viterbi decoding on the signal subjected to despreading processing output from the despreader 551, and obtains demodulated data A. In receiving apparatus 550-B, the despreader 551 multiplies the output of the combiner 153 by spreading code B and outputs the resulting signal to the UDMV 154. The UDMV 154 simultaneously performs equalization and Viterbi decoding on the signal subjected to despreading processing output from the despreader 551, and obtains demodulated data B. In receiving apparatus 550-C, the despreader 551 multiplies the output of the combiner 153 by spreading code C and outputs the resulting signal to the UDMV 154. The UDMV 154 simultaneously performs equalization and Viterbi decoding on the signal subjected to despreading processing output from the despreader 551, and obtains demodulated data C.

The operation of a transmitting apparatus 500 and receiving apparatus 550 with the above-described configurations will now be described.

First, in the transmitting apparatus 500, transmit data A is convolutional-coded by CC 101-A, multiplied by spreading code A in SPR 501-A, and output to RTS 102-1 through 102-3. Transmit data B is convolutional-coded by CC 101-B, multiplied by spreading code B in SPR 501-B, and output to RTS 102-1 through 102-3. Transmit data C is convolutional-coded by CC 101-C, multiplied by spreading code C in SPR 501-C, and output to RTS 102-1 through 102-3. The signals output by SPR 501-A through 501-C are multiplied by carriers with different frequencies f1 through f3, respectively, in RTS 102-1 through 102-3, and radio frequency signals are obtained. These radio frequency signals are added by an adder 103, and the resulting signal is transmitted from the antenna 104.

In receiving apparatus 550-A, a signal transmitted from the transmitting apparatus 500 that has been subjected to distortion arising in the channel is received by the antenna 151. This received signal is multiplied in radio receiving sections 152-1 through 152-3, respectively, by carriers of different frequencies f1 through f3, and baseband signals #1 through #3 are obtained. These baseband signals #1 through #3 undergo maximal-ratio-combining in the combiner 153, the resulting signal undergoes despreading processing by the despreader 551 followed by simultaneous equalization and Viterbi decoding by the UDMV 154, and demodulated data A is obtained. Demodulated data B and demodulated data C are obtained in the same way in receiving apparatus 550-B and receiving apparatus 550-C.

Thus, according to a receiving apparatus and transmitting apparatus of this embodiment, the transmitting apparatus performs despreading processing on transmit signals using spreading codes A through C each specific to an individual receiving apparatus, and then multiplies the transmit signals by a plurality of carriers of different frequencies, thereby enabling the same kind of effect to be obtained as with Embodiment 1, and also allowing a plurality of users' signals to be transmitted by multiplexing in the same frequency band. Also, since spreading processing is executed on the transmit signals, it is possible to use the same frequency in adjacent cells in cellular communications. Consequently, channel capacity can be increased.

A transmitting apparatus 500 according to this embodiment can be used as a base station apparatus in a cellular system. Also, receiving apparatuses 550-A through 550-C according to this embodiment can be used as mobile station apparatuses in a cellular system. When a transmitting apparatus 500 is used as a base station apparatus in this way, signals that have undergone spreading processing are multiplied by a spreading code for base station apparatus identification ( scramble code) in spreaders 501-A through 501-C. A scramble code is a spreading code specific to an individual base station apparatus. A mobile station apparatus that receives a signal multiplied by a scramble code in this way can identify the base station apparatus that transmitted the signal by multiplying the received signal by the scramble codes for each base station apparatus, and establish communication with that base station apparatus.

### (Embodiment 4)

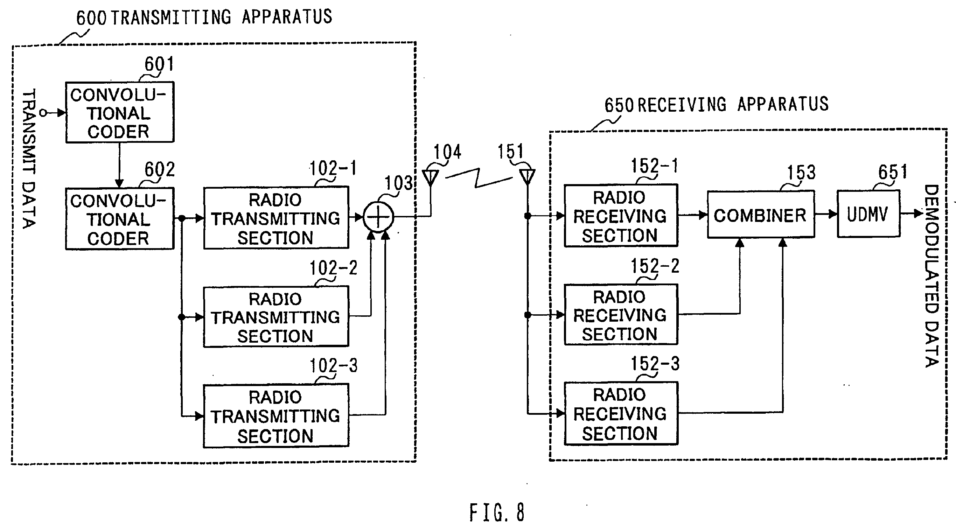

This embodiment is a modified example of Embodiment 1, differing from Embodiment 1 in that two convolutional coders are connected in series and a signal with a lowered code rate is transmitted. This embodiment will be described below with reference to FIG.8. Parts in FIG.8 identical to those in Embodiment 1 are assigned the same codes as in Embodiment 1 and their detailed explanations are omitted.

FIG.8 is a block diagram showing a schematic configuration of a receiving apparatus and transmitting apparatus according to Embodiment 4 of the present invention. Convolutional coder 601 performs convolutional coding of transmit data using code rate R1 and constraint length K1, and outputs the resulting signal to convolutional coder 602. Convolutional coder 602 performs convolutional coding of the transmit sequence output from convolutional coder 601 using code rate R2 and constraint length K2, and outputs the resulting signal to radio transmitting sections 102-1 through 102-3. Convolutional coder 601 and convolutional coder 602 connected in series in this way can be considered as a single convolutional coder with code rate (R1×R2) and constraint length (K1+K2-1).

A UDMV 651 provided in the receiving apparatus 650 is a demodulator combining an MLSE equalizer and a Viterbi decoder, and is provided with a digital filter configured so as to have a state in which convolutional coder 601 and convolutional coder 602 connected in series and distortion arising in a channel are combined. The UDMV 651 simultaneously performs equalization and Viterbi decoding on the maximal-ratio-combining baseband signal output from the combiner 153, and obtains demodulated data.

The operation of a transmitting apparatus and receiving apparatus with the above configurations will now be described.

Transmit data undergoes convolutional coding by convolutional coder 601 using code rate R1 and constraint length K1, followed by convolutional coding by convolutional coder 602 using code rate R2 and constraint length K2. That is to say, transmit data undergoes convolutional coding with code rate (R1×R2) and constraint length (K1+K2-1) by convolutional coder 601 and convolutional coder 602 connected in series, and a baseband signal is generated. This baseband signal is multiplied by carriers of different frequencies f1 through f3, respectively, in radio transmitting sections 102-1 through 102-3, and radio frequency signals are obtained. These radio frequency signals are added by an adder 103, and the resulting signal is transmitted from the antenna 104.

In the receiving apparatus 650, a signal transmitted from the transmitting apparatus 600 that has been subjected to distortion arising in the channel is received by the antenna 151. This received signal is multiplied in radio receiving sections 152-1 through 152-3, respectively, by carriers of different frequencies f1 through f3, and baseband signals #1 through #3 are obtained. These baseband signals #1 through #3 undergo maximal-ratio-combining in the combiner 153. The maximal-ratio-combining baseband signal is input to the UDMV 651, equalization and Viterbi decoding are performed simultaneously by the UDMV 651, and demodulated data is obtained.

Thus, according to a receiving apparatus and transmitting apparatus of this embodiment, a convolutional coder with a low code rate can be implemented easily in the transmitting apparatus by connecting convolutional coders in series, enabling error rate characteristics to be improved with a simple configuration.

### (Embodiment 5)

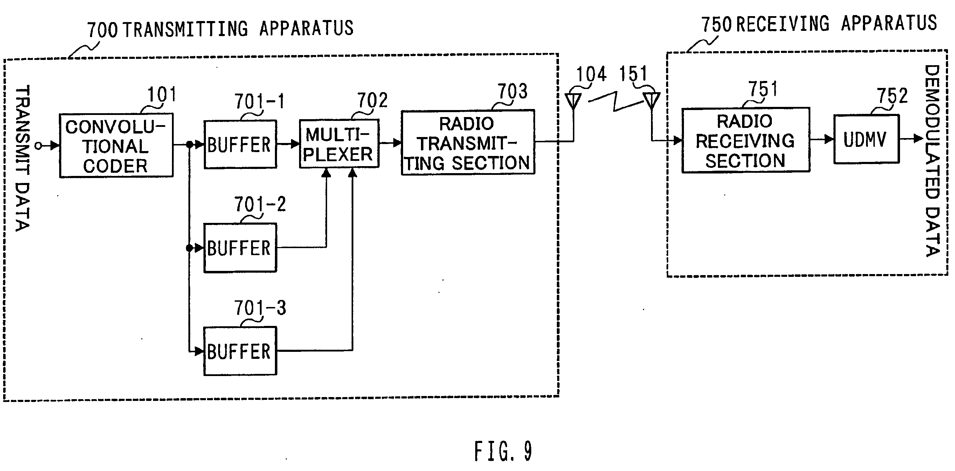

Embodiment 5 is a time diversity example in which transmit data is transmitted in a plurality of time slots. This embodiment will be described below with reference to FIG. 9. Parts in FIG.9 identical to those in Embodiment 1 are assigned the same codes as in Embodiment 1 and their detailed explanations are omitted.

FIG.9 is a block diagram showing a schematic configuration of a receiving apparatus and transmitting apparatus according to Embodiment 5 of the present invention.

First, the configuration of the transmitting apparatus 700 will be described. The transmitting apparatus 700 performs radio communication with a receiving apparatus 750. Buffer 701-1 outputs output from a convolutional coder 101, delayed by t1, to a multiplexer 702. Buffer 701-2 outputs output from the convolutional coder 101, delayed by t2, to the multiplexer 702. Buffer 701-3 outputs output from the convolutional coder 101, delayed by t3, to the multiplexer 702. The multiplexer 702 adds the delayed baseband signals output from buffers 701-1 through 701-3, and outputs the resulting signal to a radio transmitting section 703. The radio transmitting section 703 multiplies a high-frequency carrier by the output of the multiplexer 702 to create a radio frequency signal, and transmits that radio frequency signal via an antenna 104.

Next, the configuration of the receiving apparatus 750 will be described.

A radio receiving section 751 receives a signal transmitted from the transmitting apparatus 700 via an antenna 151, executes predetermined radio processing on the received signal, and outputs the resulting signal to a UDMV 752. The UDMV 752 is a demodulator combining an MLSE equalizer and a Viterbi decoder. The UDMV 752 regards the delay due to buffers 701-1 through 701-3 as delay in the channel, and addition by the multiplexer as overlaying of delayed waves, so that a transmission function can be estimated with the section from each buffer to the multiplexer 702, radio transmitting section 703, antenna 104, and antenna 151 as one channel. The UDMV 752 compensates for signal distortion due to multipath propagation and performs received signal equalization using the estimated transmission function.

The operation of a transmitting apparatus 700 and receiving apparatus 750 with the above configurations will now be described.

First, in the transmitting apparatus 700, transmit data is convolutional-coded by the convolutional coder 101 and a baseband signal is generated. This baseband signal has a delay of t1 through t3 applied in buffers 701-1 through 701-3, respectively, and the respective signals are added by the multiplexer 702, multiplied by a high-frequency carrier in the radio transmitting section 703, and transmitted from the antenna 104. The signals transmitted as a plurality of sequences from the transmitting apparatus 700 are each transmitted at a different timing. As fading varies with time, signals transmitted at different timings undergo different fading in the channel.

The receiving apparatus 750 receives via the antenna 151 a signal transmitted from the transmitting apparatus 700 that has been subjected to distortion arising in the channel. This received signal is subjected to predetermined radio processing in the radio receiving section, and is input to the UDMV 752. Equalization and Viterbi decoding are performed simultaneously in the UDMV 752, and demodulated data is obtained.

Thus, according to a receiving apparatus and transmitting apparatus of this embodiment, a transmitting apparatus 700 transmits transmit data after applying mutually different delays and performing multiplexing, so that transmit signals undergo mutually different fading in the channel, and a receiving apparatus 750 performs maximal-ratio-combining of received signals that have been subjected to different fading in the channel, compensating for fading that is a cause of burst errors, and demodulates the fading-compensated signal with a UDMV 752, so that adequate error rate characteristics can be obtained even when there is fading that causes burst errors in a channel.

### (Embodiment 6)

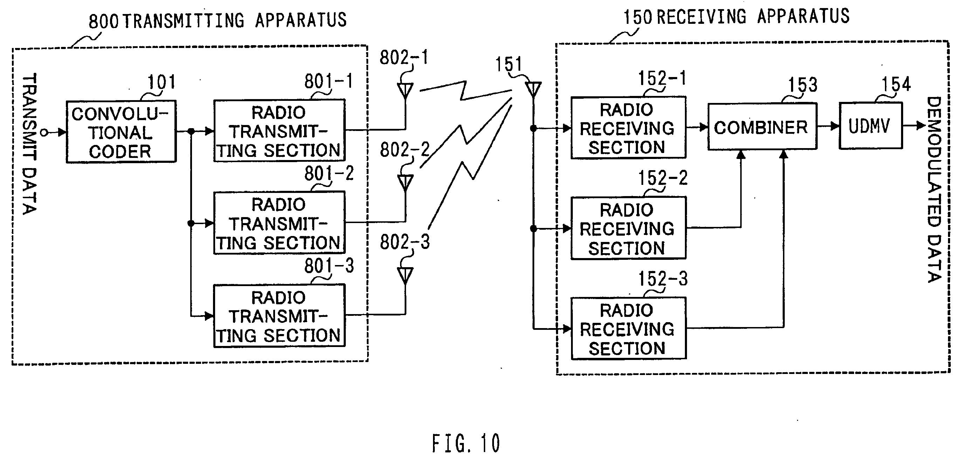

Embodiment 6 is a space diversity example in which transmit data is transmitted using a plurality of antennas . This embodiment will be described below with reference to FIG.10. Parts in FIG.10 identical to those in Embodiment 1 are assigned the same codes as in Embodiment 1 and their detailed explanations are omitted.

FIG.10 is a block diagram showing a schematic configuration of a receiving apparatus and transmitting apparatus according to Embodiment 6 of the present invention. As regards the configuration of the transmitting apparatus 800, a case is described, as an example, where transmit data is transmitted after being distributed to three sequences. The transmitting apparatus 800 performs radio communication with a receiving apparatus 150. A convolutional coder 101 performs convolutional coding of transmit data with a predetermined constraint length to create a baseband signal, and outputs this baseband signal to three radio transmitting sections 801-1 through 801-3. Radio transmitting sections 801-1 through 801-3 multiply carriers with different frequencies f1 through f3, respectively, by the baseband signal output from the convolutional coder 101 to create radio frequency signals. Radio transmitting sections 801-1 through 801-3 transmit the radio frequency signals from corresponding antennas 802-1 through 802-3. Antennas 802-1 through 802-3 are provided at locations mutually separated in space so that the transmit signals are subjected to uncorrelated fading.

The operation of a transmitting apparatus 800 with the above configuration and receiving apparatus 150 will now be described.

First, in the transmitting apparatus 800, transmit data is convolutional-coded by the convolutional coder 101 and a baseband signal is generated. This baseband signal is multiplied by carriers with different frequencies f1 through f3, respectively, in radio transmitting sections 801-1 through 801-3, and the resulting signals are transmitted from corresponding antennas 802-1 through 802-3.

As signals transmitted from antennas 802-1 through 802-3 follow different paths in the channel, they are received by the antenna 151 after being subjected to virtually uncorrelated fading. The sequences of signals received in this way undergo maximal-ratio-combining by a combiner 153 in the same way as in Embodiment 1, and are subjected to simultaneously executed equalization and Viterbi decoding by a UDMV 154, from which demodulated data is obtained.

Thus, according to a receiving apparatus and transmitting apparatus of this embodiment, a plurality of sequences of signals are transmitted from antennas 802-1 through 802-3 mutually separated in space, so that the transmit signals are received by the receiving apparatus 150 after being subjected to different fading in the channel, and in the receiving apparatus 150 these sequences of signals undergo maximal-ratio-combining and compensation of signal distortion due to fading, enabling burst error occurrence to be suppressed.

### (Embodiment 7)

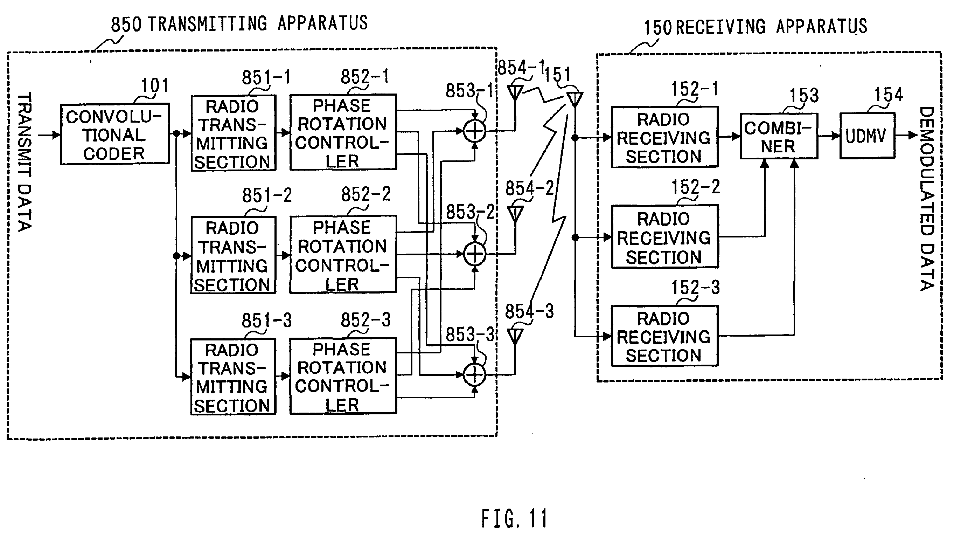

Embodiment 7 is an angular diversity example in which signals are transmitted using an adaptive array antenna whereby directivity is controlled adaptively by applying weights to the antenna outputs of a plurality of antenna elements. This embodiment will be described below with reference to FIG.11. Parts in FIG.11 identical to those in Embodiment 1 are assigned the same codes as in Embodiment 1 and their detailed explanations are omitted.

FIG.11 is a block diagram showing a schematic configuration of a receiving apparatus and transmitting apparatus according to Embodiment 7 of the present invention. A transmitting apparatus 850 performs radio communication with a receiving apparatus 150. A convolutional coder 101 performs convolutional coding of transmit data with a predetermined constraint length to create a baseband signal, and outputs this baseband signal to three radio transmitting sections 851-1 through 851-3. Radio transmitting sections 851-1 through 851-3 multiply carriers with different frequencies f1 through f3, respectively, by the baseband signal output from the convolutional coder 101 to create radio frequency signals. Radio transmitting sections 851-1 through 851-3 output radio frequency signals to corresponding phase rotation controllers 852-1 through 852-3.

Phase rotation controller 852-1 calculates a weight for forming directivity according to prior knowledge, etc., performs complex multiplication of the calculated weight by the output of radio transmitting section 851-1, and outputs the result of the multiplication to adders 853-1 through 853-3. An LMS algorithm or RLS algorithm is suitable as the algorithm for calculating the weight. Similarly, phase rotation controller 852-2 and phase rotation controller 852-3 calculate a weight for forming directivity according to prior knowledge, etc., perform complex multiplication of the calculated weight by the output of corresponding radio transmitting section 851-2 or 851-3, and output the result of the multiplication to adders 853-1 through 853-3. Phase rotation controllers 852-1 through 852-3 calculate weights so that radio frequency signals output from radio transmitting sections 851-1 through 851-3 are transmitted with different directivities. For example, phase rotation controller 852-1 may generate a weight so as to form directivity in the direct wave direction, while phase rotation controller 852-2 generates a weight so as to form directivity in a delayed wave direction, and phase rotation controller 852-3 generates a weight so as to form directivity in the direction of a delayed wave arriving from a different direction from that in which directivity is generated by phase rotation controller 852-2. Adders 853-1 through 853-3 add the outputs of phase rotation controllers 852-1 through 852-3, and output the resulting signals to corresponding antennas 854-1 through 854-3.

The operation of a transmitting apparatus 850 and receiving apparatus 150 with the above configurations will now be described.

First, in the transmitting apparatus 850, transmit data is convolutional-coded by the convolutional coder 101 and a baseband signal is generated. This baseband signal is multiplied by carriers with different frequencies f1 through f3, respectively, by radio transmitting sections 851-1 through 851-3, and the resulting signals are output to corresponding phase rotation controllers 852-1 through 852-3. In phase rotation controllers 852-1 through 852-3, the radio frequency signals output from radio transmitting sections 851-1 through 851-3 are multiplied by weights so that each has a different directivity, and the resulting signals are output to adders 853-1 through 853-3. In adders 853-1 through 853-3 the three sequences of radio frequency signals from phase rotation controllers 852-1 through 852-3 are added, and the resulting signals are transmitted from antennas 854-1 through 854-3.

As transmit signals are transmitted with mutually different directivities formed by phase rotation controllers 852-1 through 852-3, they are received by the receiving apparatus 150 after being subjected to virtually uncorrelated fading in the channel. Therefore, the sequences of received signals are subjected to virtually uncorrelated fading. The received sequences of received signals received undergo maximal-ratio-combining by a combiner 153 and are compensated for the effects of fading in the same way as in Embodiment 1. The received signal compensated for the effects of fading is subjected to simultaneous equalization and Viterbi decoding in a UDMV 154, and demodulated data is obtained.

Thus, according to a receiving apparatus and transmitting apparatus of this embodiment, a plurality of sequences of signals are transmitted after mutually different directivities have been formed, so that the transmit signals are received by the receiving apparatus 150 after being subjected to mutually virtually uncorrelated fading in the channel, and in the receiving apparatus 150 these sequences of signals undergo maximal-ratio-combining and compensation of signal distortion due to fading, enabling burst error occurrence to be suppressed.

### (Embodiment 8)

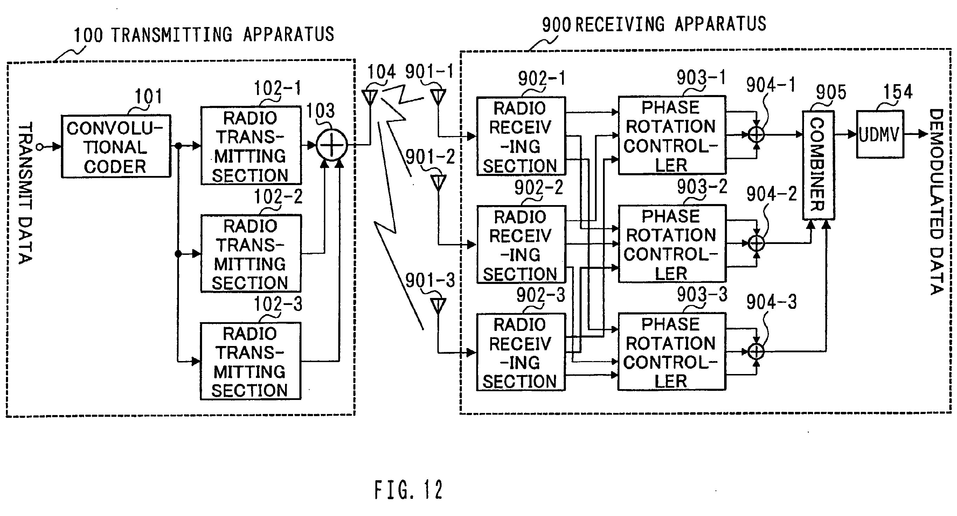

Embodiment 8 is an angular diversity example in which signals are received using an adaptive array antenna whereby directivity is controlled adaptively by applying weights to the antenna outputs of a plurality of antenna elements. This embodiment will be described below with reference to FIG.12. Parts in FIG.12 identical to those in Embodiment 1 are assigned the same codes as in Embodiment 1 and their detailed explanations are omitted.

FIG.12 is a block diagram showing a schematic configuration of a receiving apparatus and transmitting apparatus according to Embodiment 8 of the present invention. A receiving apparatus 900 performs radio communication with a transmitting apparatus 100. Radio receiving sections 902-1 through 902-3 receive transmit signals from the transmitting apparatus 100 via corresponding antennas 901-1 through 901-3, execute predetermined radio reception processing on those received signals, and generate baseband signals which they output to phase rotation controllers 903-1 through 903-3.

Phase rotation controller 903-1 calculates a weight for forming directivity according to prior knowledge, etc., performs complex multiplication of the calculated weight by the output of radio receiving section 902-1, and outputs the result of the multiplication to adder 904-1. An LMS algorithm or RLS algorithm is suitable as the algorithm for calculating the weight. Similarly, phase rotation controller 903-2 and phase rotation controller 903-3 calculate a weight for forming directivity according to prior knowledge, etc., perform complex multiplication of the calculated weight by the output of corresponding radio receiving section 902-2 or radio receiving section 902-3, and output the result of the multiplication to corresponding adder 904-2 or adder 904-3. Phase rotation controllers 903-1 through 903-3 calculate mutually different weights. For example, phase rotation controller 903-1 may generate a weight so as to form directivity in the direct wave direction, while phase rotation controller 903-2 generates a weight so as to form directivity in a delayed wave direction, and phase rotation controller 903-3 generates a weight so as to form directivity in the direction of a delayed wave arriving from a different direction from that in which directivity is generated by phase rotation controller 903-2.

Adders 904-1 through 904-3 add the outputs of corresponding phase rotation controllers 903-1 through 903-3, and output the results of the additions to a combiner 905. The combiner 905 performs maximal-ratio-combining on the outputs of adders 904-1 through 904-3, and outputs the resulting signal to a UDMV 154. The UDMV 154 simultaneously performs equalization and Viterbi decoding on the maximal-ratio-combining baseband signal output from the combiner 905, and obtains demodulated data.

The operation of a transmitting apparatus 100 and receiving apparatus 900 with the above configurations will now be described.

In the receiving apparatus 900, signals transmitted from the transmitting apparatus 100 are received by antennas 901-1 through 901-3. These sequences of received signals undergo predetermined radio reception processing in radio receiving sections 902-1 through 902-3, and become baseband signals. These baseband signals are multiplied by weights in phase rotation controllers 903-1 through 903-3 so that they have mutually different directivities, and are output to adders 904-1 through 904-3 . In adders 904-1 through 904-3, the outputs from phase rotation controllers 903-1 through 903-3 are added and the results are output to the combiner 905. As the sequence outputs from adders 904-1 through 904-3 are each multiplied by a weight so as to form a different directivity for each sequence, fading is virtually uncorrelated between the sequences. In the combiner 905, outputs of adders 904-1 through 904-3 undergo maximal-ratio-combining in the same way as in Embodiment 1, and signal distortion due to fading is compensated for. The received signal compensated for the effects of fading is input to the UDMV 154 where simultaneous equalization and Viterbi decoding are executed, and demodulated data is obtained.

Thus, according to a receiving apparatus and transmitting apparatus of this embodiment, the receiving apparatus receives a plurality of sequences of signals transmitted from the transmitting side so that each sequence has a different directivity, and performs maximal-ratio-combining of these sequences of signals and compensation of signal distortion due to fading, enabling burst error occurrence to be suppressed and error rate characteristics to be improved.

### (Embodiment 9)

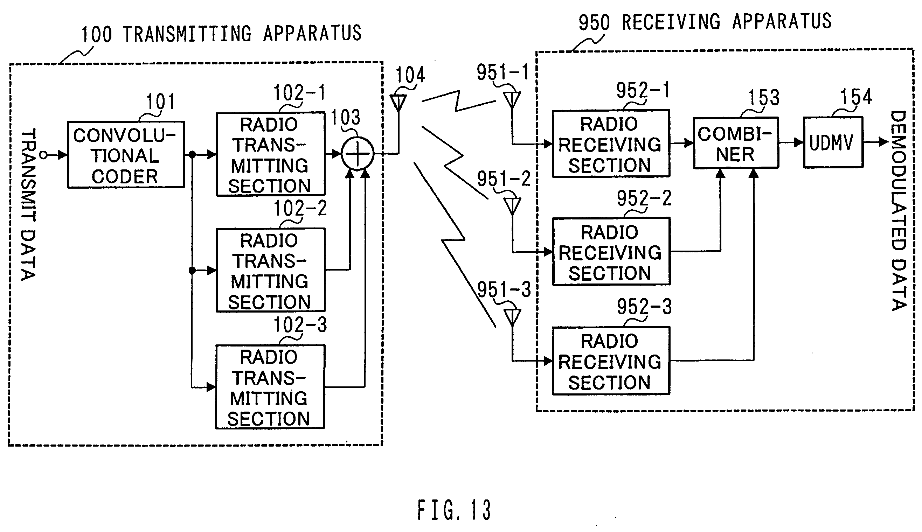

Embodiment 9 is a space diversity example in which transmit data is received using a plurality of antennas. This embodiment will be described below with reference to FIG.13. Parts in FIG.13 identical to those in Embodiment 1 are assigned the same codes as in Embodiment 1 and their detailed explanations are omitted.

FIG.13 is a block diagram showing a schematic configuration of a receiving apparatus and transmitting apparatus according to Embodiment 9 of the present invention. A receiving apparatus 950 performs radio communication with a transmitting apparatus 100. Radio receiving sections 952-1 through 952-3 receive transmit signals from the transmitting apparatus 100 via corresponding antennas 951-1 through 951-3, execute predetermined radio reception processing on those received signals, and generate baseband signals, which are output to a combiner 153. The combiner 153 performs maximal-ratio-combining on the outputs of radio receiving sections 952-1 through 952-3, and outputs the resulting signal to a UDMV 154. The UDMV 154 simultaneously performs equalization and Viterbi decoding on the maximal-ratio-combining baseband signal output from the combiner 153, and obtains demodulated data.

The operation of a transmitting apparatus 100 and receiving apparatus 950 with the above configurations will now be described.

In the receiving apparatus 950, signals transmitted from the transmitting apparatus 100 are received by antennas 951-1 through 951-3 via different paths. Thus, the sequences of received signals received by antennas 951-1 through 951-3 are subjected to mutually virtually uncorrelated fading in the channel. These sequences of received signals undergo predetermined radio reception processing in radio receiving sections 952-1 through 952-3, and become baseband signals #1 through #3. In the combiner 153, these baseband signals #1 through #3 undergo maximal-ratio-combining in the same way as in Embodiment 1, and signal distortion due to fading is compensated for. The received signal compensated for the effects of fading is input to the UDMV 154 where simultaneous equalization and Viterbi decoding are executed, and demodulated data is obtained.

Thus, according to a receiving apparatus and transmitting apparatus of this embodiment, the receiver receives a plurality of sequences of signals subjected to mutually virtually uncorrelated fading via antennas 951-1 through 951-3 that are mutually separated in space, and these sequences of signals undergo maximal-ratio-combining arid compensation of signal distortion due to fading, enabling burst error occurrence to be suppressed and error rate characteristics to be improved.

### (Embodiment 10).

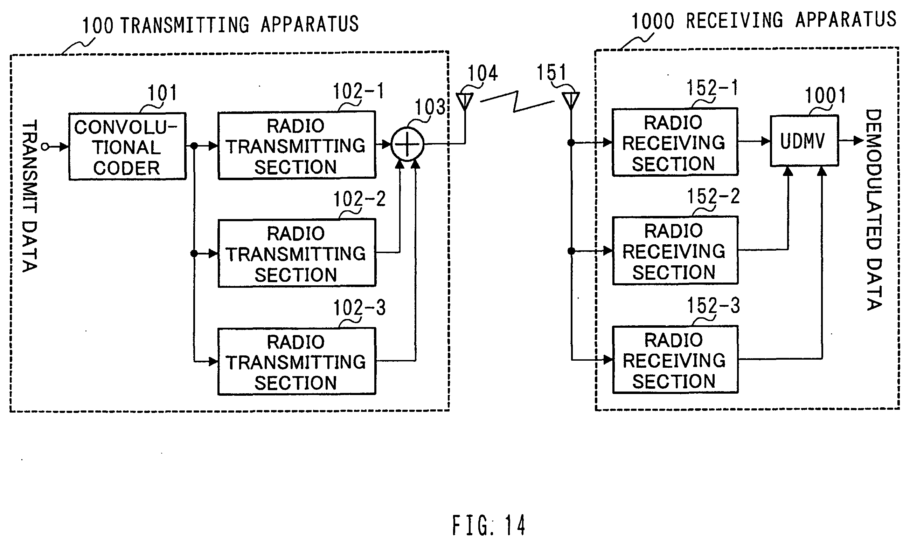

This embodiment is a modified example of Embodiment 1, being an example in which distortion due to fading is compensated for by adding error signals generated on a sequence-by-sequence basis. That is to say, this embodiment differs from Embodiment 1 in that error signals are generated before received signals of each sequence are combined. This embodiment will be described below with reference to FIG.14. Parts in FIG.14 identical to those in Embodiment 1 are assigned the same codes as in Embodiment 1 and their detailed explanations are omitted.

FIG.14 is a block diagram showing a schematic configuration of a receiving apparatus and transmitting apparatus according to Embodiment 10 of the present invention. A receiving apparatus 1000 performs radio communication with a transmitting apparatus 100. In the receiving apparatus 1000, radio receiving sections 152-1 through 152-3 receive transmit signals from the transmitting apparatus 100 via an antenna 151, and multiply those received signals by carriers of frequencies f1 through f3 to produce baseband signals #1 through #3. A UDMV 1001 generates an error signal for each sequence of baseband signals #1 through #3, and compensates for signal distortion due to fading by adding the generated error signals. The UDMV 1001 also performs Viterbi decoding according to the result of error signal addition, and obtains demodulated data.

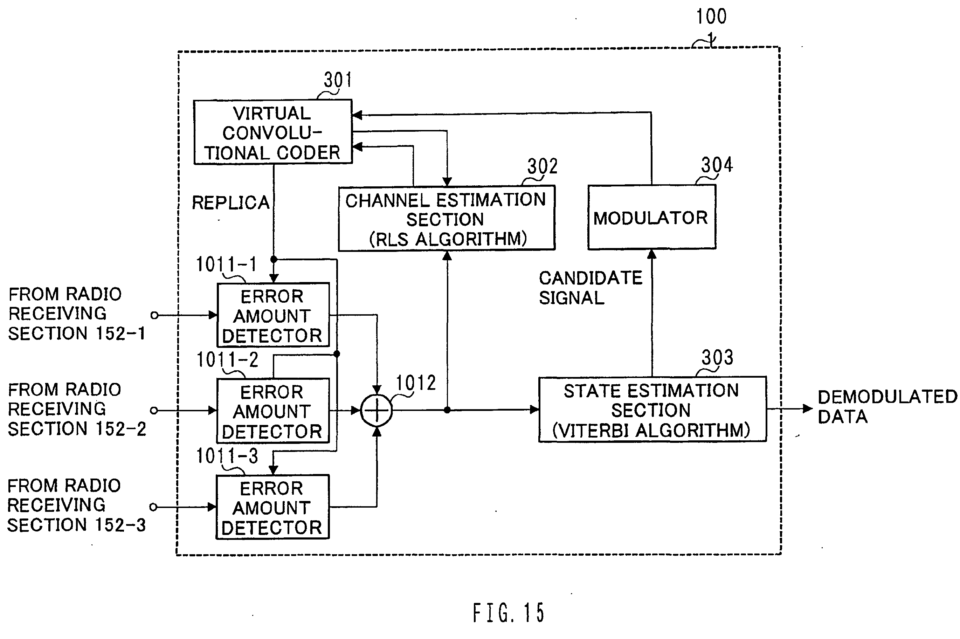

FIG.15 shows the configuration of the functional blocks of the UDMV 1001. A state estimation section 303 outputs a candidate signal corresponding to the number of bits of the transmit signal to a virtual convolutional coder 301 via a modulator 304. A virtual convolutional coder 301 generates a replica with the candidate signal as input, and outputs the replica to error amount detectors 1011-1 through 1011-3. Error amount detectors 1011-1 through 1011-3 find the difference between each received signal sequence from radio receiving sections 152-1 through 152-3 and the replica from the virtual convolutional coder 301, generate an error signal, square the generated error signal, and output the resulting signal to an adder 1012. The adder 1012 takes the squared error signals of each sequence from error amount detectors 1011-1 through 1011-3 and adds these error signals. The state estimation section 303 takes the sum of the squared error signals of each sequence from the adder 1012, and obtains demodulated data by means of a Viterbi algorithm.

The operation of a receiving apparatus 1000 with the above configurations will now be described.

In the receiving apparatus 1000, signals. transmitted from the transmitting apparatus 100 and subjected to distortion arising in the channel are received by the antenna 151. These received signals are multiplied, respectively, by carriers of different frequencies f1 through f3, and become baseband signals #1 through #3. As baseband signals #1 through #3 are transmitted by the transmitting apparatus 100 by means of carriers of different frequencies, they are subjected to mutually virtually uncorrelated fading. These baseband signals #1 through #3 are input to the UDMV 1001 where they undergo simultaneous equalization and Viterbi decoding, and demodulated data is obtained.

Next, the operation of the UDMV 1001 will be described.

In the UDMV 1001, a replica generated by the virtual convolutional coder 301 is output to error amount detectors 1011-1 through 1011-3. In error amount detectors 1011-1 through 1011-3, the difference between each received signal sequence from radio receiving sections 152-1 through 152-3 and the replica from the virtual convolutional coder 301 is found, and error signals for each sequence are generated. The generated error signals are squared and output to the adder 1012. In the adder 1012, the squared error signals of each sequence output from error amount detectors 1011-1 through 1011-3 are added. The state estimation section 303 takes the sum of the squared error signals of each sequence from the adder 1012, and obtains demodulated data by means of a Viterbi algorithm.

Thus, according to a receiving apparatus and transmitting apparatus of this embodiment, compensation of signal distortion due to fading that causes burst errors is performed by adding the squares of error signals generated on a sequence-by-sequence basis, enabling error rate characteristics to be improved even when there is fading that causes burst errors in a channel.

Also, since a receiving apparatus according to this embodiment finds the difference from a replica before received signals of each sequence are combined, generates error signals on a sequence-by-sequence basis, and adds the squares of the generated error signals, the error signal values used in the Viterbi algorithm are larger than in the case where the difference from a replica is found after received signals have been combined and an error signal for a single sequence is generated. There are consequently fewer errors in the selection of a Viterbi algorithm surviving path, enabling error rate characteristics to be further improved.

In the above embodiments, a case where there are three transmit sequences or receive sequences has been described as an example, but the present invention is not limited to this, and there may be any number of transmit sequences or receive sequences.

In the above embodiments, maximal-ratio-combining has been described as an example of a method of combining a plurality of receive sequences, but the present invention is not limited to this, and another combining method may be used. For example, equal-gain-combining may be used, whereby baseband signals from which the effects of fading have been eliminated are added directly, without being weighted. Also, selective-combining may be used, whereby only the baseband signal whose estimated received power is greatest is selected.

In the above embodiments, a case where signals of a plurality of sequences are combined by a combiner and signal distortion due to fading is compensated for has been described as an example. However, depending on the channel state and diversity branch configuration, there may be cases where there is correlation between the fading of the different sequences. In such cases, signal distortion due to fading may not be compensated for even though the signals of each sequence are combined. Therefore, it is also possible to provide a correlation monitoring section in a receiving apparatus according to the above embodiments to monitor correlation between fading of each sequence, and to combine the signals of each sequence only when the result of monitoring by the correlation monitoring section shows that fading correlation between the sequences is lower than a predetermined value. As a result, signals of each sequence are combined only when fading correlation between the sequences is low, thereby enabling the processing efficiency of the receiving apparatus to be increased.

In the above embodiments, frequency diversity, time diversity, space diversity, and angular diversity have been given as examples, but the present invention is not limited to these, and polarization diversity may also be used. With polarization diversity, diversity branch is configured using differences in planes of polarization. When polarization diversity is used as transmission diversity, waves with different planes of polarization are transmitted using diversity branch. Waves transmitted in this way are subjected to different fading for each plane of polarization in the channel. By performing maximal-ratio-combining of received signals on the receiving side, signal distortion due to fading that is a cause of burst errors is compensated for and error rate characteristics are improved. When polarization diversity is used as reception diversity, waves with different planes of polarization are received using diversity branch. As received signals received in this way are subjected to different fading in the channel for each plane of polarization, signal distortion due to fading that is a cause of burst errors is compensated for and error rate characteristics are improved by performing maximal-ratio-combining of received signals. With linear polarization, vertical polarization and horizontal polarization are used, and with circular polarization, right-handed polarization and left-handed polarization are used.

The present invention can be implemented by combining the above embodiments as appropriate. For example, on the transmitting side, it is possible to perform convolutional coding of a transmit signal using a plurality of error correcting coders, perform spreading processing on the convolutional-coded transmit signal, multiply the transmit signal subjected to spreading processing by a plurality of carriers of different frequencies to produce a plurality of transmit signal sequences, apply a different delay to each of these sequences, and also formmutually different directivities before transmitting them. On the receiving side, it is possible to receive signals transmitted in this way and combine them after forming a different directivity for each sequence. That is to say, frequency diversity, time diversity, space diversity, and polarization diversity can be used in combination as appropriate.

As described above, according to the present invention it is possible to correct burst errors and improve the error rate characteristics of demodulated data even when there is fading that causes burst errors in a channel.

This application is based on Japanese Patent Application No.2000-186501 filed on June 21, 2000, entire content of which is expressly incorporated by reference herein.

### Industrial Applicability

The present invention is applicable to a receiving apparatus that performs compensation of signal distortion due to multipath fading, and error correction, and a transmitting apparatus that performs data transmission to this receiving apparatus.

## Claims

1. A transmitting apparatus that communicates with a receiving apparatus that has demodulating means for simultaneously performing equalization that compensates for signal distortion due to multipath fading and error correction that decodes error-correcting-coded data, said transmitting apparatus comprising:
distributing means for distributing transmit data to a plurality of sequences; and
radio transmitting means for performing radio transmission of data distributed to a plurality of sequences by said distributing means.

2. The transmitting apparatus according to claim 1, wherein said distributing means performs serial/parallel conversion of transmit data and distributes said transmit data to a plurality of sequences.

3. The transmitting apparatus according to claim 1, wherein said radio transmitting means performs radio transmission of data distributed to a plurality of sequences by diversity branch.

4. The transmitting apparatus according to claim 3, wherein said diversity branch is configured by using frequency diversity and multiplying data of each sequence by carriers of different frequencies to create a radio frequency signal.

5. The transmitting apparatus according to claim 3, wherein said diversity branch is configured by using time diversity and transmitting data of each sequence at different timing.

6. The transmitting apparatus according to claim 3, wherein said diversity branch is configured by using space diversity and transmitting data of each sequence using a corresponding antenna located at a predetermined distance in space from other antennas.

7. The transmitting apparatus according to claim 3, wherein said diversity branch is configured by using angular diversity and transmitting data of each sequence with different directivity.

8. The transmitting apparatus according to claim 3, wherein said diversity branch is configured by using polarization diversity and transmitting data of each sequence using waves with mutually different planes of polarization.

9. A data transmission method in a transmitting apparatus that communicates with a receiving apparatus that has demodulating means for simultaneously performing equalization that compensates for signal distortion due to multipath fading and error correction that decodes error-correcting-coded data, said data transmission method comprising:
a step of distributing transmit data to a plurality of sequences; and
a step of performing radio transmission of data distributed to a plurality of sequences.

10. A receiving apparatus comprising:
radio receiving means for performing radio reception of a plurality of sequences of data;
combining means for combining a plurality of sequences of data that have undergone radio reception by said radio receiving means; and
demodulating means for simultaneously performing equalization that compensates for signal distortion due to multipath fading and error correction that decodes error-correcting-coded data on a result obtained by combining a plurality of sequences of data by said combining means.

11. The receiving apparatus according to claim 10, wherein said radio receiving means performs radio reception of a plurality of sequences of data by diversity branch.

12. The receiving apparatus according to claim 10, wherein said combining means performs parallel/serial conversion of, and combines, a plurality of sequences of data that have undergone radio reception.

13. The receiving apparatus according to claim 10, further comprising correlation monitoring means for monitoring correlation of signal distortion due to multipath fading for a plurality of sequences of data that have undergone radio reception, wherein said combining means combines a plurality of sequences of data that have undergone radio reception according to results of monitoring by said correlation monitoring means.

14. A data reception method comprising:
a step of performing radio reception of a plurality of sequences of data;
a step of combining a plurality of sequences of data that have undergone radio reception; and
a step of simultaneously performing equalization that compensates for signal distortion due to multipath fading and error correction that decodes error-correcting-coded data on a result obtained by combining a plurality of sequences of data, and obtaining demodulated data.

15. A base station apparatus that has the transmitting apparatus according to any one of claim 1 through claim 8.

16. A base station apparatus that has the receiving apparatus according to any one of claim 10 through claim 13.

17. A communication terminal apparatus that has the transmitting apparatus according to any one of claim 1 through claim 8.

18. A communication terminal apparatus that has the receiving apparatus according to any one of claim 10 through claim 13.
